# EUROPEAN PATENT SPECIFICATION

(11) **EP 2 283 560 B1**
(45) Date of publication and mention of the grant of the patent: **21.09.2011**
(21) Application number: 09742582.1
(22) Date of filing: 04.05.2009
(51) Int. Cl.: H02K 1/14, H02K 21/22

(54) **ELECTROMECHANICAL MACHINE**
ELEKTROMECHANISCHE MASCHINE
MACHINE ÉLECTROMÉCANIQUE

(30) Priority: 02.05.2008 IN CH10932008
(43) Date of publication of application: 16.02.2011
(73) Proprietor: TVS Motor Company Limited, Chennai 600006 (IN)
(72) Inventor: DESHPANDE YATEENDRA, Balkrishna, Chennai 600 006 (IN); SAMRAJ JABEZ, Dhinagar, Chennai 600 006 (IN)
(74) Representative: Collin, Jérôme
(86) International application number: PCT/IN2009/000264
(87) International publication number: WO 2009/136415

(56) References cited:
- EP-A- 1 450 463
- JP-A- 10 257 734
- US-B1- 6 762 525

## Description

### TECHNICAL FIELD

The subject matter described herein, in general, relates to an electromechanical machine and in particular relates to an electromechanical machine for use as a generator or a motor.

### BACKGROUND

In general, an electromechanical machine, such as a generator or a motor, functions in accordance with the changing magnetic flux through a coil placed within a magnetic field. The magnetic field is generated by the magnets placed around the coil. The magnets may be permanent magnets or electromagnets. The magnetic flux in the coil can be changed either by moving the coil with respect to the magnets or moving the magnets with respect to the coil. The member that remains stationary is typically known as a stator, and the member that rotates is known as a rotor. The coil moving relative to the magnets can therefore be a rotor or a stator, depending on whether it is in motion or stationary in free space. The conventional electromechanical machines typically include a rotor made of a permanent magnet while the stator is made of a magnetic material and has a coil wound around it.

The electromechanical machine can be used as a generator or as a motor. When used as a generator, the coil or the magnets are rotated in order to provide a relative motion between the two. Relative motion between the coil and the magnets, in presence of the magnetic field produced by the magnets, results in a change of the magnetic flux through the coil, thereby resulting in the generation of voltage in the coil. When used as a motor, current is allowed to pass through the coil which forces the coil or the magnets to rotate relative to each other, thereby resulting in the generation of mechanical energy (i.e., torque). Electromechanical machines are disclosed in prior-art documents US 6762525, JP 10257734, EP 1450463.

Conventional electromechanical machines have low utilization of the magnetic flux generated in the stator. Their construction is such that it disallows the complete extraction of the magnetic flux generated around the coil. Hence, only a part of the magnetic flux is utilized and thus the overall efficiency of such a machine is not fully realized. Also, the area occupied by the conductor wires in the slots of the stator is not sufficiently utilized, resulting in a low fill factor of the coil winding. Due to this, there are more power losses and more noise in the machine. Hence, conventional electromechanical machines are low on performance, high on material cost, and do not optimally utilize the space available.

### SUMMARY

The invention is defined in the independent claim 1. Further embodiments of the invention are defined in the dependent claims 2 - 12.

The subject matter described herein is directed towards an electromechanical machine functioning as a generator or a motor. The electromechanical machine includes a first member which is a hollow cylinder. The hollow cylinder is configured to rotate about a longitudinal axis passing through the centre of a supporting plate. Further, the electromechanical machine includes a second member having a number of core elements held together by a support structure. Each core element is a C-shaped structure having a first end portion, a second end portion, and a curved middle portion connecting the first end portion and the second end portion. An electrically conducting wire is wound around the middle portion such that two ends of the conducting wire are available for an external contact.

Furthermore, the electromechanical machine includes a number of equally spaced radial magnets and a number of equally spaced axial magnets. The radial magnets are so arranged such that their magnetic lines of force are along a radial direction with reference to the longitudinal axis. Further, the axial magnets are so arranged such that their magnetic lines of force are parallel to the longitudinal axis of the first member.

Each core element of the second member is held by the support structure in a manner such that the first end portion and the second end portion of each core element protrudes out of the support structure. The second member is so placed within the first member such that the first end portion of each of the core elements faces one of the radial magnets while the second end portion faces one of the axial magnets. The radial magnet facing the first end portion has a magnetic polarity opposite to the magnetic polarity of the axial magnet facing the second end portion of the same core element.

The electromechanical machine as described herein optimally utilises the magnetic flux generated in the electromechanical machine for generating electrical energy (i.e., voltage) or mechanical energy (i.e., torque). In addition, the electromechanical machine utilizes the flux produced along the radial direction as well as along the axial direction with reference to the longitudinal axis. Further, the electromechanical machine has a high fill factor of the wire winding, i.e., the area occupied by the winding of the conductor wire in the curved middle portion of the core element is high. More wire wound around the curved middle portion means more number of turns of the wire. As the number of turns of wire increase, the change in the magnetic flux through the wire also increases as more magnetic lines of force are cut per second. Due to this, the amount of output produced by the machine increases and there are less power losses and less noise in the machine. Hence, the overall performance of the electromechanical machine is high; the material cost is low; and space utilization is optimum.

### BRIEF DESCRIPTION OF THE DRAWINGS

**FIG. 1** shows an exploded view of an exemplary electromechanical machine, according to one embodiment of the invention.
**FIG. 2** shows a cross-sectional view of an exemplary arrangement of a second member within a first member, according to one embodiment of the invention.
**FIG. 3** shows a perspective view of the second member of FIG. 2, according to one embodiment of the invention.
**FIG. 4** shows a perspective view of an individual core element, according to one embodiment of the invention.

### DETAILED DESCRIPTION

A typical electromechanical machine functions based on the changing magnetic flux through a coil placed within a magnetic field. The magnetic field is generated by permanent magnets placed around the coil. The magnetic flux through the coil can be changed either by moving the coil with respect to the permanent magnets or moving the permanent magnets with respect to the coil. More the change in the magnetic flux, more is the generation of energy, either in the form of electrical energy (i.e., voltage), when the machine is used as a generator, or mechanical energy (i.e., torque), when the machine is used as a motor.

The subject matter described herein is directed towards an electromechanical machine used as a generator or a motor. The electromechanical machine described herein includes a first member which is a hollow cylinder. In an embodiment, the hollow cylinder may be coupled to a base, which in turn can be placed over a supporting plate. In another embodiment, the hollow cylinder may not have a base and may be directly coupled to the supporting plate. The first member is configured to rotate about a longitudinal axis passing through the centre of the supporting plate. Further, the electromechanical machine includes a second member mounted within the first member and having a number of core elements held together by a support structure. Each core element is a C-shaped structure having a first end portion, a second end portion, and a curved middle portion connecting the first end portion and the second end portion.

An electrically conducting wire is wound around the middle portion such that at least two contacts of the wound wire are available for an external contact. Hence, the wire allows the utilization of the flux from both its ends, thereby overcoming the limitation of the conventional machines in which the flux produced could be extracted from only one end.

The middle portion of the core element has a curved shape, which allows more wire to be wound around it. As a result, the number of turns of the wire increases. With the increase in the number of turns of the wire, the change in the magnetic flux through the wire also increases as more magnetic lines of force are cut per second. Due to this, there are less power losses and less noise in the machine. Also, the productivity of the machine is high.

The electromechanical machine further includes a number of equally spaced radial magnets placed along the inner wall of the cylindrical surface of the first member. The electromechanical machine also includes a number of equally spaced axial magnets. The axial magnets may be placed on the base coupled to the first member or the supporting plate that is directly coupled to the first member. The radial magnets produce magnetic lines of force in a radial direction with reference to the longitudinal axis and the axial magnets produce magnetic lines of force in a direction parallel to the longitudinal axis.

Further, the second member is so placed within the first member such that the first end portion of each of the core elements faces one of the radial magnets while the second end portion faces one of the axial magnets. The radial magnet facing the first end portion has a magnetic polarity opposite to the magnetic polarity of the axial magnet facing the second end portion of the same core element. Such an arrangement of the radial magnets, the axial magnets, and the core elements makes the machine compact and easy to handle. It also allows the optimum utilization of the flux generated in the radial direction as well as in the axial direction. Also, it allows proper utilization of space and allows the use of a conducting wire having bigger diameter. The use of bigger diameter conducting wire reduces resistance, thereby reducing copper losses in the machine.

The first member as described above can either be a rotor or a stator based on whether it is a rotating member or a stationary member. Similarly, the second member as described above can either be a rotor or a stator based on the same logic. However, for the purpose of explanation and by no limitation, the first member described herein is a rotor and the second member is a stator.

In an embodiment of the invention, the electromechanical machine acts as a generator. When used as a generator, a torque is applied to the shaft, which rotates the first member and as a result, voltage is generated in the conducting wire provided in the second member. The voltage is used to generate current which can be drawn through the two ends of the electrically conducting wire that were left out for the external contact.

In yet another embodiment of the invention, the electromechanical machine acts as a motor. When used as a motor, a current is applied to the conducting wire. The current acts as a torque generating current in presence of the varying magnetic flux, thus causing the first member to rotate. The rotation of the first member causes the rotation of the shaft. The rotating shaft can be used to drive any other machine or implementation that requires a mechanical energy for its working.

The electromechanical machine as described above may be used in various applications, such as applications where a rotor-stator assembly may be implemented using the aforementioned first member and second member assembly, for generation of electrical energy (i.e., voltage) or mechanical energy (i.e., torque). However, for the purpose of explanation and by no limitation, the implementation of the electromechanical machine described here is in a two-wheeled vehicle.

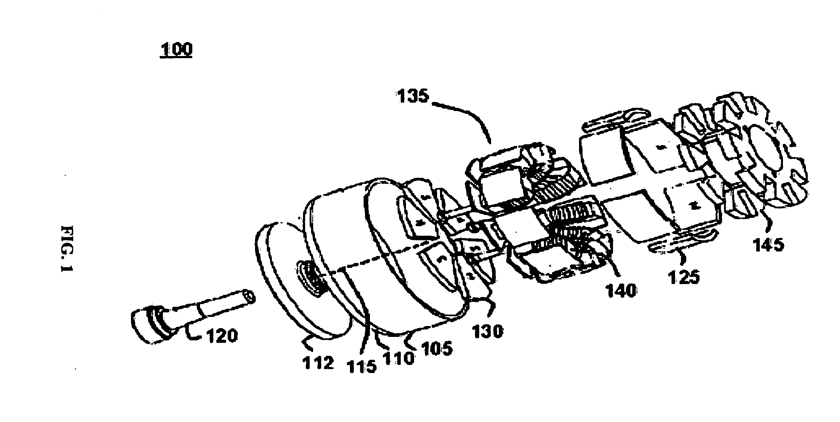

**FIG. 1** shows an exploded view of an exemplary electromechanical machine **100**, according to one embodiment of the invention.

In one embodiment, the electromechanical machine **100** comprises a first member **105**, which is a hollow cylinder coupled to a base **110** provided for closing one end of the cylinder. For example, the base **110** may be a part of the first member **105** or may be attached to the first member **105** by any means known in the art. The first member **105** is configured to rotate about a longitudinal axis **115** passing through the centre of the base **110**. A shaft **120** is accommodated within the first member **105**, along the longitudinal axis **115**, through a supporting plate **112**. The first member **105** further includes a number of equally spaced radial magnets **125** and a number of equally spaced axial magnets **130**. The radial magnets **125** are placed along the inner wall of the cylindrical surface of the first member **105**, while the axial magnets **130** are placed on the base **110**.

In another embodiment, the first member **105** may be a hollow cylinder without a base, and the axial magnets **130** may be placed on the supporting plate **112** to which the first member **105** can be directly coupled.

The electromechanical machine **100** further includes a second member **135** having a number of core elements **140** having a C-shaped structure and held together by a support structure **145**.

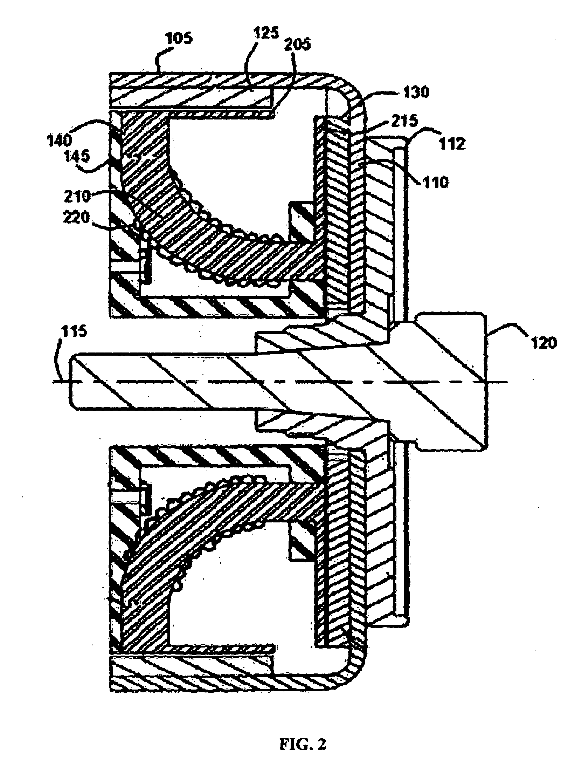

**FIG. 2** shows a cross-sectional view of an exemplary arrangement of the second member **135** within the first member **105**, according to one embodiment of the invention.

As shown, the shaft **120** is accommodated within the first member **105**, along the longitudinal axis **115**, through the supporting plate **112**. The radial magnets **125** are placed along the inner wall of the cylindrical surface of the first member **105** such that the magnetic lines of force produced by the radial magnets **125**, are in a radial direction with reference to the longitudinal axis **115**. Further, the axial magnets 130 are placed on the base **110** such that the magnetic lines of force produced by the axial magnets **130**, are parallel to the longitudinal axis **115**. As discussed earlier, it will be understood, that in another embodiment, the axial magnets **130** may be directly placed on the supporting plate **112**.

The core elements **140** of the second member **135** are held together by the support structure **145**. An electrically conducting wire **220** is wound around the curved middle portion **210** such that at least two ends of the wire **220** remain available for an external contact. The middle portion **210** being curved allows more wire to be wound around it. Winding more wire around the curved portion increases the number of turns of the wire. The change of magnetic flux through the wire increases with the increase in the number of turns of the wire, thereby resulting in high machine output.

The second member **135** is placed within the first member **105** in a manner such that the first end portion **205** of each of the core elements **140** faces one of the radial magnets **125** while the second end portion **215** faces one of the axial magnets **130**. The radial magnet **125** facing the first end portion **205** has a magnetic polarity opposite to the magnetic polarity of the axial magnet **130** facing the second end portion **215** of the same core element **140**. Such an arrangement of the radial magnets **125**, the axial magnets **130**, and the stator core elements **140** allows utmost utilization of the flux generated in the radial direction as well as in the axial direction. Also, it allows utmost utilization of space and facilitates the use of a conducting wire having bigger diameter. The use of bigger diameter conducting wire reduces resistance, and as a result, copper losses in the machine are minimized.

In one embodiment, the first member **105** is made up of a soft magnetic material and the core element **140** is made up of soft magnetic core. In another embodiment, the radial magnets 125 can include one or more concentrically placed ring magnets. In yet another embodiment, the axial magnets **130** can be a magnetized disc. It would be appreciated by a person skilled in the art that the magnets used can be either permanent magnets or electromagnets. If the electromagnets are used in place of the permanent magnets, then necessary modifications in the construction apparent to a person skilled in the art would be required to be made.

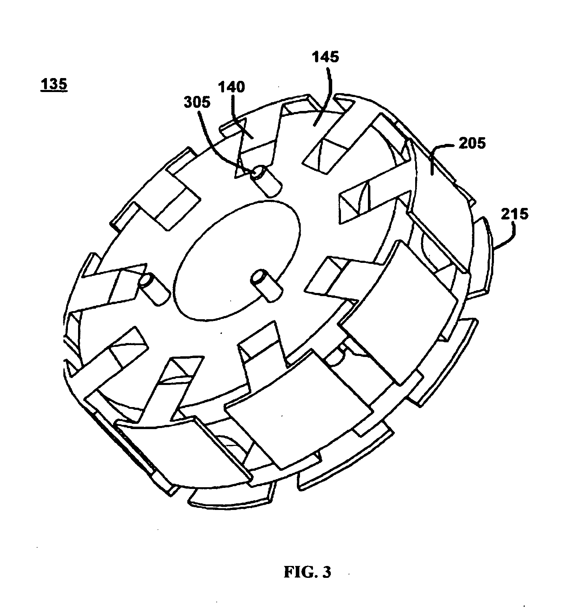

**FIG. 3** shows a perspective view of the second member **135** of **FIG. 2**, according to one embodiment of the present subject matter.

The core elements **140** are held together by the support structure **145** to form the second member **135**. Generally, the support structure **145** is a moulded structure. Bolts **305** are used to fix the second member **135** to a non-rotating external support.

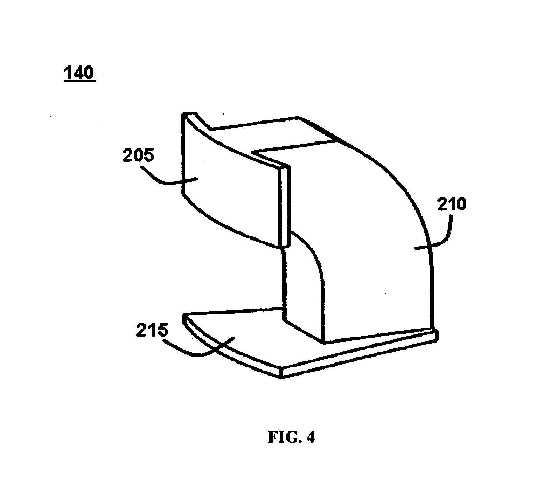

**FIG. 4** shows a perspective view of an individual core element **140**, according to one embodiment of the present subject matter.

The first end portion **205** faces one of the radial magnets **125**, while the second end portion **215** faces one of the axial magnets **130**. The first end portion **205** and the second end portion **215** is either a flat or a curved surface. In one embodiment, the first end portion **205** is a curved surface and the second end portion **215** is a flat surface. The first end portion **205** is curved because the radial magnet **125** which faces the first end portion **205** are placed along the curved inner wall of the cylindrical surface of the first member 105 and accordingly need to be aligned to the curvature of the surface. The second end portion **215** is flat because the axial magnet **130** which faces the second end portion **215** are placed , for example on the base **110** coupled to the first member **105**. Such an arrangement of the radial magnets **125**, first end portion **205**, axial magnets **130**, and second end portion **215** allows optimum usage of the magnetic flux.

Further, the machine described in the above embodiment, implementing the first member **105** as a rotor and the second member **135** as a stator, may be employed as a generator or as a motor.

In one implementation, the electromechanical machine **100** acts as a generator and electrical energy is drawn from the generator in the form of voltage. When used as a generator, the electromechanical machine **100** converts mechanical energy into electrical energy. The source of the mechanical energy can be any machinery; such as an internal combustion engine, a hand crank, compressed air or any other source of mechanical energy; which is capable of producing a drive. The mechanical energy is applied to the shaft **120**, which in turn rotates the rotor around the stator mounted within the rotor.

The rotation of the rotor causes the rotation of the radial magnets **125** placed along the inner wall of the cylindrical surface of the rotor and the axial magnets **130** mounted on the base **110** or the supporting plate **112**. The rotation of the radial magnets **125** and the axial magnets **130** with respect to the electrically conducting wire **220** wound around the curved middle portion **210** of the core elements **140** causes a change in the magnetic flux passing through the wire **220**. The change in the magnetic flux passing through the wire **220** causes generation of voltage in the wire **220**. The voltage so generated results in generation of current which can be utilized through the two ends of the wire **220** available for an external contact.

In another implementation, the electromechanical machine **100** acts as a motor for generating mechanical energy. When used as a motor, the electromechanical machine **100** converts electrical energy into mechanical energy. The electrical energy from any external source of current is connected to the wire **220** wound around the curved middle portion **210** of the core element **140**. When the current passes through the wire **220**, the current gives rise to a magnetic flux around the wire **220**. The magnetic flux so produced causes the rotor to rotate. The rotation of the rotor causes the rotation of the shaft **120**, which is accommodated within the rotor. The output from the rotating shaft **120** can be used to drive any machine or implementation that requires mechanical energy for its operation.

In yet another implementation, the above mentioned arrangement enables the electromechanical machine **100** to be used as a BLDC (brushless direct current) motor capable of producing a torque. The torque so generated can be transmitted to an external drive by the shaft **120**.

Similarly, in another embodiment, implementing the first member **105** as a stator and the second member **135** as a rotor, the machine **100** can be employed as a generator or as a motor.

The previously described versions of the invention and its equivalent thereof have many advantages, including those which are described below. The middle portion of the core element **140** being curved in shape allows a thicker wire to be wound around it. More wire means more number of turns of the wire. Higher number of turns of the wire, experience greater change in the magnetic flux through the wire since more magnetic lines of force can be intercepted by the wire. Due to this, there is an increase in the output produced by the machine and there are less power losses and less noise in the machine. Further, the use of thicker wire means lesser resistance between the two ends of the wire, thereby reducing current conduction loss in the wire.

The stator is placed within the rotor in a manner such that the first end portion **205** of each of the core elements **140** faces one of the radial magnets **125** while the second end portion **215** faces one of the axial magnets **130**. Such an arrangement of the radial magnets **125**, the axial magnets **130**, and the core elements **140** allows the optimum utilization of the flux generated in the radial direction as well as in the axial direction. Also, it allows proper utilization of space and allows the use of a conducting wire having bigger diameter for reducing copper losses in the machine. Moreover, the arrangement of the core elements **140** placed on the support structure **145** within the stator and the stator mounted within the rotor makes the machine compact and easy to handle.

## Claims

1. An electromechanical machine **(100)** comprising:
a first cylindrical hollow member **(105)**;
a second member **(135)**, wherein said second member is mounted within said first member **(105)**; and
a plurality of magnets placed within said first member **(105)**;
said magnets comprising:
a plurality of substantially equally spaced radial magnets **(125)** that generate a magnetic field in a radial direction; and
a plurality of substantially equally spaced axial magnets **(130)** that generate a magnetic field in an axial direction;
wherein said radial magnets **(125)** are mounted along the inner wall of the cylindrical surface of said first member **(105)**, and said axial magnets **(130)** are placed on either a base **(110)** or on a supporting plate **(112)**;
**characterized in that**
said second member **(135)** having a plurality of core elements **(140)**, each of said core elements **(140)** comprising:
a first end portion **(205)**, a second end portion **(215)** and a curved middle portion **(210)** connecting said first end portion **(205)** and said second end portion **(215)**, and an electrically conducting wire **(220)** wound on said curved middle portion **(210)**;
wherein said first end portion **(205)** substantially faces one of said radial magnets **(125)** and wherein said second end portion **(215)** substantially faces one of said axial magnets **(130)**;
wherein one of said radial magnets **(125)** facing said first end portion **(205)** has a magnetic polarity opposite to the magnetic polarity of said one of said axial magnets **(130)** facing said second portion **(215)**.

2. The electromechanical machine **(100)** as claimed in claim 1, wherein said first member (105) is a rotor and said second member **(135)** is a stator, or said first member **(105)** is a stator and said second member **(135)** is a rotor.

3. The electromechanical machine **(100)** as claimed in claim 1, wherein said electrically conducting wire **(220)** is wound around said middle portion **(210)** such that at least two terminals of said wound wire **(220)** are available for an external contact.

4. The electromechanical machine **(100)** as claimed in claim 1, wherein said core elements **(140)** are held together by a support structure **(145)** such that said first end portion **(205)** and said second end portion **(215)** of each core element **(140)** protrudes out of said support structure **(145)**.

5. The electromechanical machine **(100)** as claimed in claim 4, wherein said support structure **(145)** is a moulded structure.

6. The electromechanical machine **(100)** as claimed in claim 1, wherein said first end portion (205) and said second end portion **(215)** have a flat surface or a curved surface.

7. The electromechanical machine **(100)** as claimed in claim 1, wherein said first member (105) and said second member **(135)** is made of a soft magnetic material.

8. The electromechanical machine **(100)** as claimed in claim 1, wherein said plurality of radial magnets **(125)** is a continuous ring or a piecewise ring magnet.

9. The electromechanical machine **(100)** as claimed in claim 1, wherein said plurality of axial magnets **(130)** forms a circular magnetized disc.

10. The electromechanical machine **(100)** as claimed in claim 1, wherein said supporting plate **(112)** is adapted to accommodate a shaft **(120)** along said longitudinal axis **(115)**.

11. The electromechanical machine **(100)** as claimed in any of the preceding claims, wherein said electromechanical machine **(100)** is a current generating machine or a torque generating machine.

12. A vehicle comprising said electromechanical machine **(100)** as claimed in any of the preceding claims.

## Patentansprüche

1. Elektromechanische Maschine (100), umfassend:
ein erstes zylindrisches Hohlelement (105);
ein zweites Element (135), wobei das zweite Element innerhalb des ersten Elements (105) angeordnet ist; und
eine Mehrzahl von innerhalb des ersten Elements (105) angeordneten Magneten;
wobei die Magnete umfassen:
eine Mehrzahl von im Wesentlichen in gleichen Abständen angeordneten radialen Magneten (125), die ein Magnetfeld in einer Radialrichtung erzeugen; und
eine Mehrzahl von im Wesentlichen in gleichen Abständen angeordneten axialen Magneten (130), die ein Magnetfeld in einer Axialrichtung erzeugen;
wobei die radialen Magnete (125) entlang der inneren Wand der zylindrischen Fläche des ersten Elements (105) angeordnet sind und die axialen Magnete (130) entweder auf einer Basis (110) oder auf einer Stützplatte (112) angeordnet sind;
**dadurch gekennzeichnet, dass**
das zweite Element (135) eine Mehrzahl von Kernelementen (140) aufweist, wobei jedes der Kernelemente (140) umfasst:
einen ersten Endbereich (205), einen zweiten Endbereich (215) und einen gekrümmten mittleren Bereich (210), der den ersten Endbereich (205) und den zweiten Endbereich (215) verbindet, und einen elektrisch leitenden Draht (220), der auf dem gekrümmten mittleren Bereich (210) gewickelt ist;
wobei der erste Endbereich (205) im Wesentlichen einem der radialen Magnete (125) gegenübersteht und wobei der zweite Endbereich (215) im Wesentlichen einem der axialen Magnete (130) gegenübersteht;
wobei einer der dem ersten Endbereich (205) gegenüberstehenden radialen Magnete (125) eine magnetische Polarität aufweist, die der magnetischen Polarität einer der dem zweiten Endbereich (215) gegenüberstehenden axialen Magnete (130) entgegengesetzt ist.

2. Elektromechanische Maschine (100) nach Anspruch 1, wobei das erste Element (105) ein Rotor ist und das zweite Element (135) ein Stator ist, oder das erste Element (105) ein Stator ist und das zweite Element (135) ein Rotor ist.

3. Elektromechanische Maschine (100) nach Anspruch 1, wobei der elektrisch leitende Draht (220) derart um den mittleren Bereich (210) gewickelt ist, dass mindestens zwei Enden des gewickelten Drahtes (220) für einen externen Kontakt verfügbar sind.

4. Elektromechanische Maschine (100) nach Anspruch 1, wobei die Kernelemente (140) durch eine Stützstruktur (145) derart zusammengehalten sind, dass der erste Endbereich (205) und der zweite Endbereich (215) jedes Kernelement (140) aus der Stützstruktur (145) herausragen.

5. Elektromechanische Maschine (100) nach Anspruch 4, wobei die Stützstruktur (145) eine geformte Struktur ist.

6. Elektromechanische Maschine (100) nach Anspruch 1, wobei der erste Endbereich (205) und der zweite Endbereich (215) eine ebene Oberfläche oder eine gekrümmte Oberfläche aufweisen.

7. Elektromechanische Maschine (100) nach Anspruch 1, wobei das erste Element (105) und das zweite Element (135) aus einem weichmagnetischen Material hergestellt sind.

8. Elektromechanische Maschine (100) nach Anspruch 1, wobei die Mehrzahl von radialen Magneten (125) ein kontinuierlicher Ring oder ein stückweiser Ringmagnet ist.

9. Elektromechanische Maschine (100) nach Anspruch 1, wobei die Mehrzahl von axialen Magneten (130) eine ringförmige magnetisierte Scheibe bildet.

10. Elektromechanische Maschine (100) nach Anspruch 1, wobei die Stützplatte (112) für die Aufnahme eines Schaftes (120) entlang der Längsachse (115) angepasst ist.

11. Elektromechanische Maschine (100) nach einem der vorangehenden Ansprüche, wobei die elektromechanische Maschine (100) eine Strom erzeugende Maschine oder eine Drehmoment erzeugende Maschine ist.

12. Fahrzeug, umfassend die elektromechanische Maschine (100) nach einem der vorangehenden Ansprüche.

## Revendications

1. Machine électromécanique (100) comprenant :
un premier élément creux cylindrique (105) ;
un second élément (135), ledit second élément étant monté dans ledit premier élément (105) ; et
une pluralité d'aimants placés dans ledit premier élément (105) ;
lesdits aimants comprenant :
une pluralité d'aimants radiaux (125) espacés de façon sensiblement égale qui génèrent un champ magnétique dans une direction radiale ; et
une pluralité d'aimants axiaux (130) espacés de façon sensiblement égale qui génèrent un champ magnétique dans une direction axiale ;
dans laquelle lesdits aimants radiaux (125) sont montés le long de la paroi intérieure de la surface cylindrique dudit premier élément (105), et lesdits aimants axiaux (130) sont placés sur une base (110) ou sur un plaque de soutien (112) ;
**caractérisée en ce que**
ledit second élément (135) comporte une pluralité d'éléments-noyaux (140), chacun desdits éléments-noyaux (140) comprenant :
une première partie d'extrémité (205), une seconde partie d'extrémité (215) et une partie intermédiaire incurvée (210) reliant ladite première partie d'extrémité (205) et ladite seconde partie d'extrémité (215), et un fil conducteur d'électricité (220) enroulé sur ladite partie intermédiaire incurvée (210) ;
dans laquelle ladite première partie d'extrémité (205) fait sensiblement face à l'un desdits aimants radiaux (125) et dans laquelle ladite seconde partie d'extrémité (215) fait sensiblement face à l'un desdits aimants axiaux (130) ;
dans laquelle ledit aimant radial (125) qui fait face à ladite première partie d'extrémité (205) a une polarité magnétique opposée à la polarité magnétique dudit aimant axial (130) qui fait face à ladite seconde partie d'extrémité (215).

2. Machine électromécanique (100) selon la revendication 1, dans laquelle ledit premier élément (105) est un rotor et ledit second élément (135) est un stator, ou ledit premier élément (105) est un stator et ledit second élément (135) est un rotor.

3. Machine électromécanique (100) selon la revendication 1, dans laquelle ledit fil conducteur d'électricité (220) est enroulé autour de ladite partie intermédiaire (210) de sorte qu'au moins deux bornes dudit fil enroulé (220) soient disponibles pour un contact externe.

4. Machine électromécanique (100) selon la revendication 1, dans laquelle lesdits éléments-noyaux (140) sont maintenus ensemble par une structure de soutien (145) de sorte que ladite première partie d'extrémité (205) et ladite seconde partie d'extrémité (215) de chaque élément-noyau (140) fassent saillie hors de ladite structure de soutien (145).

5. Machine électromécanique (100) selon la revendication 4, dans laquelle ladite structure de soutien (145) est une structure moulée.

6. Machine électromécanique (100) selon la revendication 1, dans laquelle ladite première partie d'extrémité (205) et ladite seconde partie d'extrémité (215) comportent une surface plate ou une surface incurvée.

7. Machine électromécanique (100) selon la revendication 1, dans laquelle ledit premier élément (105) et ledit second élément (135) se composent d'un matériau magnétique mou.

8. Machine électromécanique (100) selon la revendication 1, dans laquelle ladite pluralité d'aimants radiaux (125) est un aimant à anneau continu ou un aimant à anneau segmenté.

9. Machine électromécanique (100) selon la revendication 1, dans laquelle ladite pluralité d'aimants axiaux (130) forme un disque magnétisé circulaire.

10. Machine électromécanique (100) selon la revendication 1, dans laquelle ladite plaque de soutien (112) est conçue pour accueillir une tige (120) le long dudit axe longitudinal (115).

11. Machine électromécanique (100) selon l'une quelconque des revendications précédentes, ladite machine électromécanique (100) étant une machine de génération de courant ou une machine de génération de couple.

12. Véhicule comprenant ladite machine électromécanique (100) selon l'une quelconque des revendications précédentes.
